# EUROPÄISCHE PATENTSCHRIFT

(11) **EP 1 387 458 B1**
(45) Veröffentlichungstag und Bekanntmachung des Hinweises auf die Patenterteilung: **30.08.2006**
(21) Anmeldenummer: 03016946.0
(22) Anmeldetag: 25.07.2003
(51) Int. Cl.: H02G 11/00

(54) **Kabelübergang mit flexiblem Schutzmantel**
Cable transition with flexible protective sheath
Transition de câble à gaine protectrice flexible

(30) Priorität: 29.07.2002 DE 10234413; 02.06.2003 DE 20308584 U
(43) Veröffentlichungstag der Anmeldung: 04.02.2004
(73) Patentinhaber: Link GmbH, 35510 Butzbach-Ostheim (DE)
(72) Erfinder: Link, Daniel, 35510 Butzbach (DE)
(74) Vertreter: Rentzsch, Heinz

(56) Entgegenhaltungen:
- EP-A- 1 202 403
- DE-A- 3 105 311
- DE-U- 20 015 428
- DE-U- 29 814 952

## Beschreibung

Die Erfindung betrifft einen flexiblen Kabelübergang gemäß Gattungsbegriff des Anspruchs 1. Kabelübergänge mit flexiblem Schutzmantel sind in verschiedenen Ausführungsformen bekannt. Der Schutzmantel besteht üblicherweise entweder aus einer dicht gewickelten Schraubenfeder oder aus einem gewickelten Metall- oder Kunststoffschlauch.

DE 31 05 311 A1 zeigt in Fig.1 einen flexiblen Kabelübergang mit den Merkmalen des Gattungsbegriffs von Anspruch 1, wobei als das Kabel umgebender Schutzmantel eine enggewickelte Schraubenfeder dient, deren Enden mittels je eines Kopfstücks einerseits am Fensterrahmen und andererseits am Fensterflügel befestigt sind.

DE 298 14 952 U1 beschreibt einen flexiblen Kabelübergang der gleichen Gattung und befaßt sich mit der Verbindung von Schutzfederende und Kopfstück, welches seinerseits der Befestigung des Kabelübergangs am Tür- oder Fensterrahmen dient.

DE 200 15 428 U1 zeigt einen verdeckten Kabelübergang, bei dem das Befestigen seines Einbaugehäuses in einer Ausfräsung des Trägers vereinfacht ist. Ein nachträgliches Ausstechen der gefrästen Einbaunut wird vermieden, indem das rechteckige Einbaugehäuse auf in ihren Abmessungen der Form der Ausfräsung angepaßten Unterlegstücken ruht.

In EP 1202 403 A 1 wird ein trennbarer Kabelübergang beschrieben, bei dem wenigstens eines der zur Befestigung des Kabelübergangs am Träger, z.B. Fensterrahmen, dienenden Kopfstücke zugleich als elektrischer Stecker ausgebildet ist.

Bei der Überprüfung oder Wartung von Schließ- und Sicherheitsanlagen findet man bisweilen Kabelübergänge mit beschädigtem Schutzmantel, weil Passanten oder Gebäudenutzer am Schutzmantel gezogen oder gerissen haben. Die vorliegende Erfindung soll die mechanische Sicherheit solcher flexibler Kabelübergänge weiter verbessern und Beschädigungen der genannten Art weitgehend ausschließen. Dies gelingt mit der im Anspruch 1 gekennzeichneten Erfindung. Das langgestreckte Sicherungselement hat in Längsrichtung eine hohe Zugfestigkeit und schützt somit den Kabelübergang gegen Zerstörung durch übermäßige Zugbeanspruchung. Senkrecht zu seiner Längsachse ist das Sicherungselement hingegen flexibel und paßt sich der Formänderung des Kabelübergangs im Zuge der Relativbewegung der beiden Träger, z.B. beim Öffnen und Schließen des Fensters, ohne Behinderung der Flexibilität des Kabelübergangs an. Ein Drahtseil, z.B. ein Stahldrahtseil oder ein Bowdenzug, hat in Längsrichtung eine hohe Zugfestigkeit, ist aber in Querrichtung flexibel. Außerdem sind solche Seilzüge in zahlreichen Ausfilhrungsfonnen und mit unterschiedlichen Zugfestigkeiten kostengünstig auf dem Markt erhältlich und benötigen wenig Platz innerhalb der lichten Weite des Schutzmantels. Vorteilhafte Ausgestaltungen und Weiterbildungen der Erfindung ergeben sich aus den Unteransprüchen.

Die Erfindung wird nachfolgend anhand in den Zeichnungen wiedergegebener Ausführungsbeispiele erläutert. Darin zeigt
- Fig. 1: im Längsschnitt einen flexiblen Kabelübergang mit einer dicht gewickelten Schraubenfeder als Schutzmantel und einem Drahtseil als Sicherungselement;
- Fig.2: eine Ausführungsform mit einem gewickelten Schutzschlauch;
- Fig.3: in perspektivischer Darstellung die dicht gewickelte Schraubenfeder mit eingelegtem Drahtseil sowie einer über den Hals einer Halteöse der Schraubenfeder geschobenen Halteschlaufe des Drahtseils; und
- Fig.4: im Längsschnitt ein Kopfstück eines solchen Kabelübergangs mit Kabel und Drahtseil.

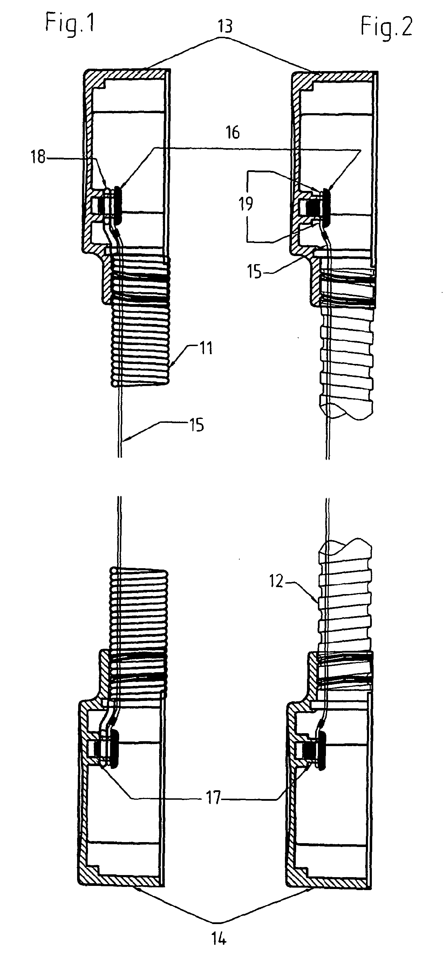

Bei den in Fig. 1 1 und 2 gezeigten Ausführungsbeispielen ist das innerhalb des Kabelübergangs verlaufende und durch diesen zu schützende, üblicherweise mehradrige, elektrische Kabel nicht eingezeichnet. Seine Anschlußenden treten aus den auf die Enden des Schutzschutzmantels 11 bzw. 12 aufgesetzten Kopfstücken 13 bzw. 14 im wesentlichen senkrecht zur Schutzmantelachse heraus. Die Kopfstücke 13 und 14 können aus Metall, z.B. Zinkdruckguß, oder Kunststoff bestehen. Ihre Form kann von der dargestellten, im wesentlichen quader- oder wannenförmigen Gestalt abweichen. Innerhalb der Kopfstücke kann eine mit den Adern des Kabels verbundene Leiterplatte und/oder der eine Teil einer Steckvorrichtung untergebracht sein, wie dies in EP 1202 403 A1 beschrieben ist.

In Fig.1 sind die Endteile der als Schutzmantel dienenden Schraubenfeder 11 in eine entsprechend geformte Aufnahmeöffnung des Kopfstücks 13 bzw. 14 eingesetzt. Die Aufnahmeöffnung für das Federende hat ein wendelförmiges Innenprofil, in welches das Federende eingeschraubt und somit kraftschlüssig mit dem Kopfstück verbunden wird. Zur Lagesicherung wird eine am Federende angeformte Halteöse 18 durch einen innen am Boden des Kopfstücks 13 bzw. 14 befestigten Blindniet 16 bzw. 17 am Kopfstück verankert. Stattdessen kann man das Kopfstück auf das Federende aufschrumpfen, im Falle eines metallischen Kopfstücks dieses mit dem Federende verlöten oder verschweißen, ein Kopfstück aus Kunststoff mit dem Federende verkleben oder zwischen beiden Teilen auf andere Weise eine lagesichere mechanische Verbindung herstellen. Dies gilt auch für den gewickelten Schutzschlauch 12 in Fig.2. Anstelle der in Fig. 1 gezeigten Halteöse 18 kann am Wicklungsende der Schraubenfeder ein anderes in Achsrichtung abstehendes Formteil vorgesehen sein, welches beispielsweise haken- oder T-förmig ausgestaltet und in einer entsprechend geformten Aufnahme des Kopfstücks gehalten ist (vgl. DE 298 14 952 U1).

Im Inneren des Schutzmantels 11 erstreckt sich parallel zum nicht dargestellten Kabel ein Drahtseil 15, vorzugsweise ein Stahldrahtseil hoher Zugfestigkeit, das mit seinen Enden am jeweiligen Kopfstück 13 bzw. 14 verankert ist. In den gezeigten Ausführungsbeispielen dient hierzu der gleiche Blindniet 16 bzw.17, dessen Schaft von der Halteöse 18 des Federendes umschlungen ist. In Fig. 1 und 2 sind die Drahtseilenden zu einer Halteschlaufe oder Halteöse 19 gebogen und am jeweiligen Kopfstück, nämlich am Blindniet 16 eingehängt.

Die Befestigung des Drahtseils 15 und/oder der Federenden am Kopfstück 13,14 kann auch auf andere Weise erfolgen, beispielsweise durch Schrauben oder Haken. Das Formteil kann beispielsweise haken- oder T-förmige Gestalt haben. Andere einfache Formen der Drahtseilbefestigung sind beispielsweise von Bowdenzügen am Fahrrad bekannt. Art und Form der Befestigung richten sich in erster Linie nach den aufzunehmenden Kräften und dem innerhalb des Kopfstücks zur Verfügung stehenden Raum. Das zusätzliche Drahtseil 15 innerhalb des Schutzmantels erhöht die Zugfestigkeit des Kabelübergangs beträchtlich, ohne dabei dessen lichten Querschnitt merklich zu verkleinern. Das Drahtseil 15 bzw. ein anderes langgestrecktes Sicherungselement mit hoher Zugfestigkeit in Längsrichtung behindert aufgrund seiner Flexibilität quer zur Längsachse die Bewegung des Kabelübergangs beim Öffnen und Schließen des Fensters oder der Tür nicht. Die Schraubenfeder 11 besteht z.B. aus Stahl oder Messing.

In Fig.2 dient anstelle einer Schraubenfeder ein gewickelter Kunststoff- oder Metallschlauch 12 als Schutzmantel. Um seine Korrosionsbeständigkeit zu erhöhen oder sein Aussehen zu verbessern kann er mit PVC ummantelt oder im Falle eines Kunststoffschlauchs metallisiert sein. Gleiches gilt für die Kopfstücke 13 und 14. Auch bei dieser Ausführungsform sorgt der eingelegte Seilzug 15 mit geringem Aufwand für eine erhöhte Sicherheit gegen Beschädigung oder gar Zerstörung des Kabelübergangs und insbesondere des darin verlaufenden elektrischen Kabels. Man erhält einen gegen Vandalismus wesentlich besser als bisher geschützten Kabelübergang, ohne daß dies von außen erkennbar ist. Die Erfindung kann nicht nur, wie gezeigt, bei freiliegenden Kabelübergängen sondern auch mit Vorteil bei verdeckten Kabelübergängen eingesetzt werden, wie sie beispielsweise aus DE 200 15 428 U1 bekannt sind.

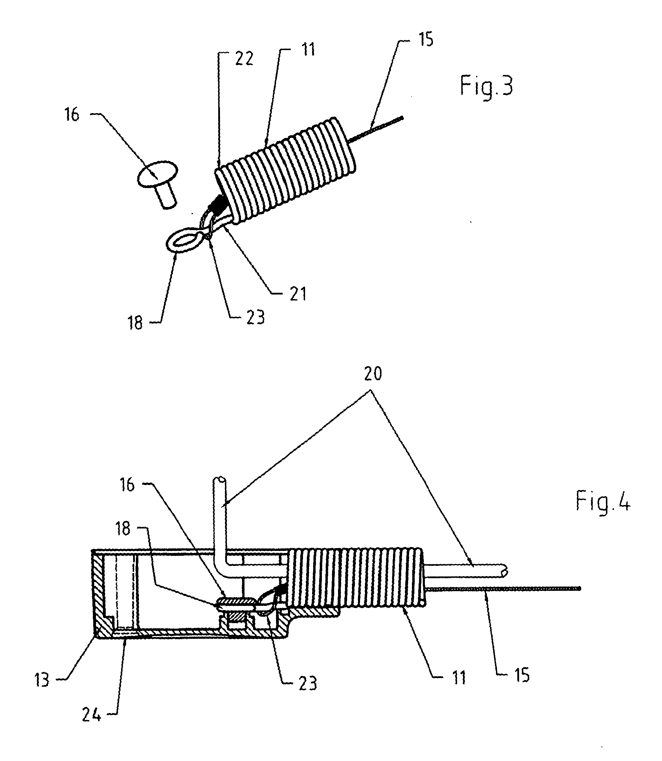

Anhand der Fig.3 und 4 wird nachfolgend eine besonders einfache und kostengünstige Art der Befestigung des Drahtseils 15 an den Kopfstücken 13,14 beschrieben. Dabei wird das Drahtseil nicht an den Kopfstücken selbst befestigt sondern von den Endteilen der den Schutzmantel bildenden Schraubenfeder 11 gehalten. Der Schutzmantel für das Kabel 20 besteht, wie in Fig. 1, aus einer dicht gewickelten Schraubenfeder 11, an deren Enden hier je ein ein Querstück bildendes oder aufweisendes Formteil, vorzugsweise eine Halteöse 18, vorgesehen ist. Mit diesem Formteil 18 wird das jeweilige Schraubenfederende 22 in einer schon mit Bezug auf Fig. erläuterten Weise am benachbarten Kopfstück 13 befestigt.

An jedem Ende des Drahtseils 15 ist eine Halteschlaufe 23 vorgesehen. Sie läßt sich leicht über die Halteöse 18 oder ein anderes Formteil am Ende der Schraubenfeder 11 auf deren zwischen Formteil 18 und Wickelende 22 befindliches Halsstück 21 schieben. Auf diese Weise können Schutzfeder 11 und Drahtseil 15 unverlierbar vormontiert werden, wobei die Halteschlaufe 23 lose auf dem Federhals 21 sitzt und folglich weder das spätere Einführen des Kabels 20 oder das Befestigen der Halteöse 18 am Kopfstück 13 des Kabelübergangs noch die Verformung des Kabelübergangs im Betrieb behindert.

In den Fig. 3 und 4 ist jeweils nur ein Teil der langgestreckten, das Kabel 20 schützenden Schraubenfeder 11 wiedergegeben, an deren Wickelende 22 die Halteöse 18 vorzugsweise einstückig angeformt ist. Das Ende des als Zugsicherung dienenden Drahtseil 15 ist zu einer Halteschlaufe 23 umgebogen und am Drahtseil angeschweißt oder festgeklemmt, z.B. mittels einer Hülse mit dem Drahtseil verpreßt, so daß die Halteschlaufe nicht ohne Zerstörung des Drahtseils lösbar ist. Diese Halteschlaufe 23 wird über die Halteöse 18 sowie das Halsstück 21 geschoben und umschlingt dieses lose. Mit einer Schraube oder einem Niet 16 wird die Halteöse 18 und somit das Schraubenfederende 22 samt Drahtseilende 23 entweder am Fenster bzw. Fensterrahmen oder, wie in Fig.4 dargestellt, am Kopfstück 13 befestigt. Das Kopfstück seinerseits wird mittels in ein oder zwei Löcher 24 eingesetzter Schrauben am ortsfesten oder beweglichen Träger, z.B. Fensterrahmen oder Fensterflügel, angebracht wird. Das Drahtseil 15 erstreckt sich im Inneren des Schutzmantels in Form der Schraubenfeder 11 parallel zum üblicherweise mehradrigen Kabel 20. Die Halterung des Drahtseilendes mittels einer lose das Halsstück 21 der Schraubenfeder 11 umschlingenden Halteschlaufe 23 ermöglicht eine einfache, unverlierbare Vormontage von Schraubenfeder 11 und Drahtseil 15 und gibt dieser in Fig.3 gezeigten vormontierten Baugruppe zugleich genügend Flexibilität für deren Einbau in die Kopfstücke und schließlich für deren Befestigung am beweglichen bzw. am ortsfesten Träger.

Diese Weiterbildung der Erfindung kann auch angewandt werden, wenn die Befestigung des Federendes 22 am Kopfstück 13 nicht mittels einer Halteöse sondern durch ein anders geformtes Querstück am Federende erfolgt. Auch in diesem Fall wird die Halteschlaufe des Drahtseils um ein zwischen Querstück und Wickelende der Schraubenfeder befindliches Halsstück gelegt. Die Halterung der Drahtseilenden mittels einer Halteschlaufe auf den Enden der Schraubenfeder ist besonders kostengünstig und mechanisch flexibel. Anstelle eines Blindniets 16 oder einer Schraube kann auch ein auf der Innenseite des Kopfstückbodens angebrachter, vorzugsweise angeformter Haken die Halteöse der Schraubenfeder halten. Dann empfiehlt es sich, durch eine die offenen Seite des Hakens abdeckende, zur Bohrung 24 gleichgerichtete zweite Befestigunsschraube das Abgleiten der Halteöse 18 vom Haken zu verhindern.

## Patentansprüche

1. Flexibler Kabelübergang, welcher zum Montieren zwischen einem ortsfesten und einem gegenüber diesem schwenkbaren Träger, insbesondere zwischen Fensterrahmen und Fensterflügel, Türrahmen und Tür geeignet ist, mit einem das Kabel umgebbaren flexiblen Schutzmantel (11;12),
**dadurch gekennzeichnet, daß** innerhalb des Schutzmantels (11;12) ein langgestrecktes, quer zu seiner Längsrichtung flexibles und in Längsrichtung zugfestes Sicherungselement (15) angeordnet ist, dessen beide Enden Haltemittel (19;23) zum Befestigen dieser Enden am ortsfesten und am schwenkbaren Träger aufweisen.

2. Kabelübergang nach Anspruch 1, **dadurch gekennzeichnet, daß** mindestens eines der Enden des Sicherungselements (15) an einem der Befestigung des Schutzmantelendes am ortsfesten bzw. schwenkbaren Träger dienenden Kopfstück (13,14) befestigbar ist.

3. Kabelübergang nach Anspruch 1 oder 2, **dadurch gekennzeichnet, daß** als langgestrecktes Sicherungselement ein Draht oder ein Drahtseil (15) dient.

4. Kabelübergang nach Anspruch 3, **dadurch gekennzeichnet, daß** der Draht bzw. das Drahtseil (15) an wenigstens einem Ende mit einem ein Querstück bildenden oder aufweisenden Formteil (19) versehen ist.

5. Kabelübergang nach einem der Ansprüche 1 bis 4, **dadurch gekennzeichnet, daß** der Schutzmantel ein gewickelter Kunststoff- oder Metallschlauch (12) ist.

6. Kabelübergang nach einem der Ansprüche 1 bis 4, **dadurch gekennzeichnet, daß** der Schutzmantel eine dicht gewickelte Schraubenfeder (11) ist.

7. Kabelübergang nach Anspruch 3 und 6, mit je einem ein Querstück bildenden oder aufweisenden Formteil (18) an den Enden der Schraubenfeder (11) sowie je einer Vorrichtung (16,17) zum Befestigen dieses Formteils (18) am ortsfesten bzw. am schwenkbaren Träger; **dadurch gekennzeichnet, daß** das Drahtseil (15) an seinen Enden mit je einer Halteschlaufe (23) versehen ist, welche ein zwischen Formteil (18) und Wickelende (22) der Schraubenfeder (11) befindliches Halsstück (21) der Schraubenfeder lose umschlingt.

8. Kabelübergang nach Anspruch 7, **dadurch gekennzeichnet, daß** jede Halteschlaufe (23) durch ein rückgebogenes und festgeklemmtes Drahtende gebildet ist.

9. Kabelübergang nach Anspruch 4 oder 7, **dadurch gekennzeichnet, daß** wenigstens eines der Formteile (19,18) haken- oder T-förmig ist.

10. Kabelübergang nach Anspruch 4 oder 7, **dadurch gekennzeichnet, daß** wenigstens eines der Formteile (19,18) eine Halteöse ist.

11. Kabelübergang nach Anspruch 4 oder 7, **dadurch gekennzeichnet, daß** wenigstens eines der Formteile (19,18) einstückig an das Drahtseil (15) bzw. die Schraubenfeder (11) angeformt ist.

12. Kabelübergang nach Anspruch 4 oder 7, **dadurch gekennzeichnet, daß** wenigstens eines der Formteile (19,18) durch eine Schraube, einen Haken oder einen Blindniet (16,17) am Kopfstück (13,14) haltbar ist.

## Claims

1. Flexible cable junction which is suited to being fitted between a stationary support and a support which can be pivoted in relation to the said stationary support, in particular between window frames and window casements and door frames and doors, having a flexible protective casing (11; 12) which can surround the cable,
**characterized in that** an elongate securing element (15) is arranged within the protective casing (11; 12), this elongate securing element being flexible transverse to its longitudinal direction, having a high tensile strength in its longitudinal direction, and having retaining means (19; 23) at its two ends for the purpose of attaching these ends to the stationary support and to the pivotable support.

2. Cable junction according to Claim 1, **characterized in that** at least one of the ends of the securing element (15) can be attached to a head piece (13, 14) which serves to attach the end of the protective casing to the stationary or pivotable support.

3. Cable junction according to Claim 1 or 2, **characterized in that** a wire or a wire cable (15) serves as the elongate securing element.

4. Cable junction according to Claim 3, **characterized in that** at least one end of the wire or the wire cable (15) is provided with a shaped part (19) which forms or has a crosspiece.

5. Cable junction according to one of Claims 1 to 4, **characterized in that** the protective casing is a wound plastic or metal tube (12).

6. Cable junction according to one of Claims 1 to 4, **characterized in that** the protective casing is a tightly wound helical spring (11).

7. Cable junction according to Claims 3 and 6, having a shaped part (18), which forms or has a crosspiece, at each of the ends of the helical spring (11) and in each case an apparatus (16, 17) for attaching this shaped part (18) to the stationary support or to the pivotable support, **characterized in that** each of the ends of the wire cable (15) is provided with a retaining loop (23) which loosely loops around a neck piece (21) of the helical spring, this neck piece being located between the shaped part (18) and the winding end (22) of the helical spring (11).

8. Cable junction according to Claim 7, **characterized in that** each retaining loop (23) is formed by a wire end which is bent back and firmly clamped.

9. Cable junction according to Claim 4 or 7, **characterized in that** at least one of the shaped parts (19, 18) is hook- or T-shaped.

10. Cable junction according to Claim 4 or 7, **characterized in that** at least one of the shaped parts (19, 18) is a retaining eye.

11. Cable junction according to Claim 4 or 7, **characterized in that** at least one of the shaped parts (19, 18) is integrally formed on the wire cable (15) or the helical spring (11).

12. Cable junction according to Claim 4 or 7, **characterized in that** at least one of the shaped parts (19, 18) can be held on the head piece (13, 14) by a screw, a hook or a blind rivet (16, 17).

## Revendications

1. Passage de câble flexible, lequel convient au montage entre un support fixe et un support capable de pivoter par rapport à celui-ci, en particulier entre des dormants de fenêtres et des vantaux de fenêtres, des dormants de portes et des portes, comportant une enveloppe de protection flexible (11; 12) capable d'entourer le câble, **caractérisé en ce qu'**un élément de sûreté (15) allongé flexible transversalement à son sens longitudinal et résistant à la traction dans le sens longitudinal, dont les deux extrémités présentent des moyens de retenue (19; 23) pour fixer lesdites extrémités au support fixe et au support pivotant, est disposé à l'intérieur de l'enveloppe de protection (11; 12).

2. Passage de câble selon la revendication 1, **caractérisé en ce qu'**au moins une des extrémités de l'élément de sûreté (15) peut être fixée à une pièce de tête (13, 14) servant à la fixation de l'extrémité de l'enveloppe de protection au support fixe ou selon le cas au support pivotant.

3. Passage de câble selon la revendication 1 ou 2, **caractérisé en ce qu'**un fil métallique ou un câble métallique (15) sert en tant qu'élément de sûreté allongé.

4. Passage de câble selon la revendication 3, **caractérisé en ce que** le fil métallique ou selon le cas le câble métallique (15) est pourvu à au moins une extrémité d'une partie façonnée (19) présentant ou formant une pièce transversale.

5. Passage de câble selon l'une quelconque des revendications 1 à 4, **caractérisé en ce que** l'enveloppe de protection est un tuyau flexible (12) enroulé en matière synthétique ou en métal.

6. Passage de câble selon l'une quelconque des revendications 1 à 4, **caractérisé en ce que** l'enveloppe de protection est un ressort à boudin (11) enroulé de façon étanche.

7. Passage de câble selon les revendications 3 et 6, comportant chacun une partie façonnée (18) présentant ou formant une pièce transversale aux extrémités du ressort à boudin (11) ainsi que chacun un dispositif (16, 17) de fixation de ladite partie façonnée (18) au support fixe ou selon le cas au support pivotant, **caractérisé en ce que** le câble métallique (15) est pourvu à chacune de ses extrémités d'une boucle de retenue (23), laquelle entoure de façon lâche un cou (21) du ressort à boudin situé entre la partie façonnée (18) et l'extrémité d'enroulement (22) du ressort à boudin (11).

8. Passage de câble selon la revendication 7, **caractérisé en ce que** chaque boucle de retenue (23) est formée par une extrémité recourbée et serrée du câble métallique.

9. Passage de câble selon la revendication 4 ou 7, **caractérisé en ce qu'**au moins une des parties façonnées (19, 18) est en forme de crochet ou de T.

10. Passage de câble selon la revendication 4 ou 7, **caractérisé en ce qu'**au moins une des parties façonnées (19, 18) est un oeillet de retenue.

11. Passage de câble selon la revendication 4 ou 7, **caractérisé en ce qu'**au moins une des parties façonnées (19, 18) est formée d'une seule pièce avec le câble métallique (15) ou selon le cas le ressort à boudin (11).

12. Passage de câble selon la revendication 4 ou 7, **caractérisé en ce qu'**au moins une des parties façonnées (19, 18) peut être retenue à la pièce de tête (13, 14) par une vis, un crochet ou un rivet aveugle (16, 17).
